# FASCICULE DE BREVET EUROPEEN

(11) **EP 0 620 385 B1**
(45) Date de publication et mention de la délivrance du brevet: **04.02.1998**
(21) Numéro de dépôt: 94400792.1
(22) Date de dépôt: 12.04.1994
(51) Int. Cl.: F16H 59/04

(54) **Ensemble de commande pour boîte de vitesses mécanique et système de commande incorporant celui-ci**
Bedienungsanordnung für ein mechanisches Geschwindigkeitswechselgetriebe und mit einer derartigen Anordnung versehene Steuerung
Control assembly for a mechanical gearbox and control system incorporating such an assembly

(30) Priorité: 13.04.1993 FR 9304313
(43) Date de publication de la demande: 19.10.1994
(73) Titulaire: MAGNETI MARELLI FRANCE, 92000 Nanterre (FR)
(72) Inventeur: Bezkorowajnyj, Jean, F-92310 Sèvres (FR)
(74) Mandataire: Martin, Jean-Jacques

(56) Documents cités:
- EP-A- 0 075 693
- EP-A- 0 175 061
- EP-A- 0 365 715
- EP-A- 0 400 419
- FR-A- 2 672 953
- US-A- 4 610 179

## Description

La présente invention concerne le domaine des boîtes de vitesses de véhicules automobiles.

On sait qu'il existe aujourd'hui, sur le marché, des véhicules équipés de boîtes de vitesses dite mécaniques et des boîtes de vitesses dite automatiques.

Dans le cas des boîtes de vitesses mécaniques, le rapport d'engrenages engagé est choisi de façon univoque par le conducteur, à l'aide d'un levier adapté et les commutations d'engrenages sont commandées mécaniquement et directement par ledit levier.

En revanche, dans le cas des boîtes de vitesses automatiques, le conducteur n'a accès, par le biais d'un levier, qu'au choix d'un mode de conduite avant (petite ou grande vitesse), ou arrière et les positions point mort qu point neutre (parfois dénommée "position garage"). Sur cette base un module pilote automatiquement la boîte de vitesses tant dans un sens d'évolution des rapports que dans l'autre, c'est-à-dire tant dans le sens montée des rapports de vitesse que dans le sens de descente de ceux-ci, sans que le conducteur ne puisse alors imposer un choix précis de rapport.

Les boîtes de vitesses automatiques sont assez bien admises par certains conducteurs. Toutefois, les boîtes de vitesses automatiques ne font pas l'unanimité. En particulier, le marché latin accepte assez peu celles-ci.

Le document US-A-4610179 décrit un dispositif de commande pour boîte de vitesses de véhicule automobile, comprenant un levier de commande, des moyens de support et de guidage à pivotement du levier de commande, et des organes de contrôle sensibles au déplacement du levier de commande pour définir des ordres de passage des rapports de la boîte de vitesses, lesquels organes de contrôle comprennent des paires d'aimants et sondes à effet Hall placés respectivement, en regard, de part et d'autre d'un tiroir ajouré lié à déplacement avec le levier, de sorte qu'une sonde soit activée lorsqu'une ouverture du tiroir est placée en regard et au contraire soit désactivée lorsque la paroi du tiroir est placée en regard de la sonde.

Le document EP-A- 0 175 061 décrit un dispositif de commande pour boîte de vitesses comportant les caractéristiques du préambule de la revendication 1, avec un levier guidé sur une grille en forme de "T", où le neutre est à la base du "T", les montées et les descentes de rapports étant placées de part et d'autre de la position médiane.

Le but principal de la présente invention est de proposer de nouveaux moyens permettant de conserver les boîtes de vitesses mécaniques tout en améliorant le confort de conduite.

Ce but est atteint dans le cadre de la présente invention grâce à un ensemble de commande et un système de commande d'une boîte de vitesses mécanique du type défini dans les revendications annexées.

Selon une caractéristique préférentielle de l'invention, les actionneurs sont en outre pilotés par un module électronique relié à un capteur de vitesse, lequel module électronique contrôle que des actionneurs ont bien exécuté des ordres de passage émis par l'ensemble de commande, en fonction de la vitesse du véhicule.

La présente invention concerne avant tout l'ensemble de commande précité.

Selon une première caractéristique importante de la présente invention, les organes de contrôle comportent une série de capteurs sensibles au déplacement du levier.

Selon une autre caractéristique avantageuse de la présente invention, les capteurs composant les organes de contrôle sont des capteurs à sortie électrique.

Selon une autre caractéristique avantageuse de la présente invention, les organes de contrôle comprennent des capteurs sans contact physique.

Selon une autre caractéristique avantageuse de la présente invention les organes de contrôle comprennent des sondes à effet Hall.

Selon une autre caractéristique avantageuse de la présente invention, les organes de contrôle comprennent deux plaques adjacentes : l'une mobile liée à déplacement au levier, l'autre fixe, une première plaque étant pourvue d'aimants, tandis que la seconde plaque est pourvue de sondes à effet Hall. De préférence, la première plaque est formée de la plaque mobile et la seconde plaque est formée de la plaque fixe. En variante, cependant on peut prévoir que la première plaque soit la plaque fixe et la seconde plaque soit la plaque mobile.

Selon une seconde caractéristique importante de la présente invention, les moyens de support et de guidage du levier sont adaptés pour supporter celui-ci à pivotement autour de deux axes perpendiculaires entre eux.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique, partiellement en coupe, des moyens de support et de guidage d'un levier conforme à la présente invention,
- la figure 2 représente une vue similaire d'une cage intermédiaire incorporée à ces moyens de support et de guidage,
- la figure 3 représente également une vue partielle de la figure 1 illustrant les moyens de support et de guidage disposés sur le levier,
- la figure 4 représente une vue partielle d'organes de contrôle conforme à la présente invention et illustre plus précisément, selon une vue en plan, une plaque support de sondes à effet Hall,
- la figure 5 représente une autre vue partielle d'organes de contrôle conformes à la présente invention et illustre plus précisément, une seconde plaque support d'aimants,
- les figures 6 à 10 annexées représentent schématiquement les deux plaques précitées superposées, dans les diverses positions d'exploitation correspondant respectivement : au point neutre, à une commande de montée de rapport de vitesse, à une commande de descente de rapport de vitesse, à une position de point mort, et une commande de marche arrière,
- la figure 11 représente une vue schématique, sous forme de blocs fonctionnels d'un système de commande conformes à la présente invention,
- la figure 12 représente schématiquement la trajectoire du levier.

Comme on l'a indiqué précédemment, la présente invention concerne avant tout un système de commande d'une boîte de vitesses mécanique comportant essentiellement, comme schématisé sur la figure 11, un ensemble de commande 100, un module électronique 200 et des actionneurs 300 pour piloter une boîte de vitesses mécanique 400. Comme on le précisera par la suite, l'ensemble de commande 100 comporte essentiellement :
- un levier de commande 110,
- des moyens 120 servant de support et de guidage à déplacement au levier de commande 110 et
- des organes de contrôle 150 formés de transducteurs d'ordre, sensibles au déplacement du levier de commande 110 pour définir des ordres de passage des rapports de la boîte de vitesses.

Ces ordres de passage générés en sortie des organes de contrôle 150 sont appliqués au module électronique 200. Ce dernier pilote les actionneurs 300. Ces derniers agissent sur la boîte de vitesses 400 pour exécuter les changements de rapport sur la base des ordres émis par l'ensemble de commande 100. En outre, de préférence, le module électronique 200 est relié à un capteur de vitesse 500 du véhicule de sorte que le module électronique 200 contrôle l'exécution par les actionneurs 300 des ordres de passage émis par l'ensemble de commande 100 en fonction de la vitesse du véhicule. Pour cela, le module électronique 200 n'applique les ordres issus de l'ensemble de commande 100, sur les actionneurs 300, qu'à la condition que ces ordres soient compatibles avec la vitesse réelle du véhicule détectée par le capteur 500.

En pratique, les actionneurs 300 peuvent être composés de vérins de commande intégrés dans la boîte de vitesses 400 et d'électrovalves associées pilotées par le module électronique 200.

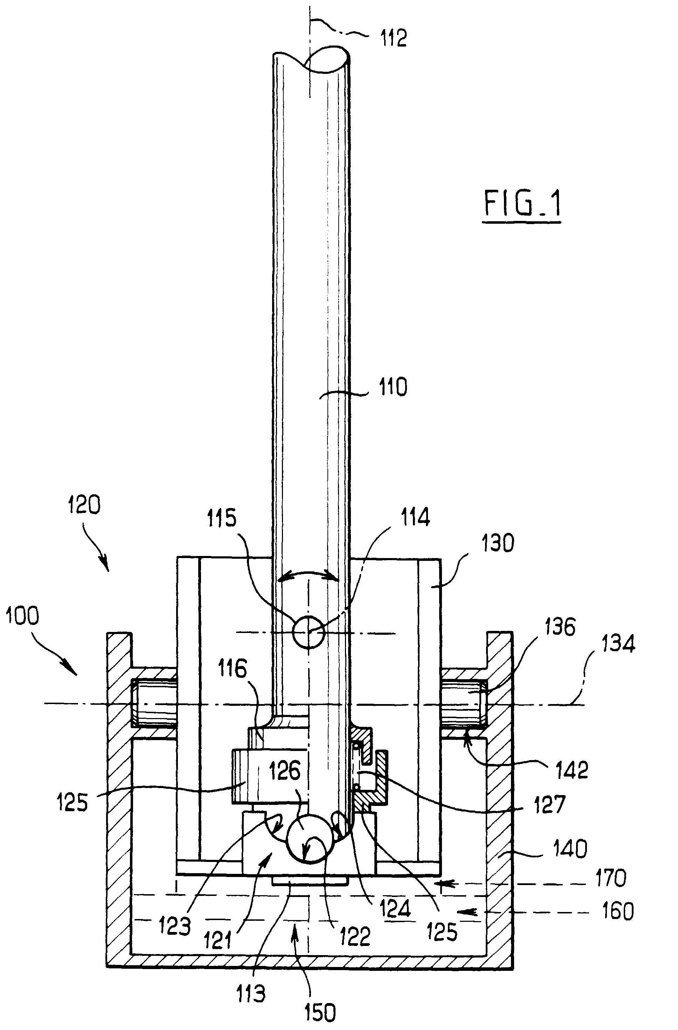

On va maintenant décrire la structure des moyens 120 de support et de guidage du levier conformes au mode de réalisation préférentiel représenté sur les figures 1 à 3 annexées.

Selon ce mode de réalisation représenté sur les figures 1 à 3, les moyens 120 de support et de guidage du levier 110 comprennent essentiellement un boîtier 140 et une cage intermédiaire 130.

Le levier 110 est formé de préférence d'une tige généralement rectiligne centrée sur un axe longitudinal 112.

Le levier 110 est monté à pivotement sur la cage intermédiaire 130 autour d'un axe 114 orthogonal et sécant de l'axe longitudinal 112 précité.

La cage intermédiaire 130 est elle-même montée à pivotement sur le boîtier 140 autour d'un second axe 134. Ce second axe 134 est à la fois orthogonal au premier axe 114 et de préférence orthogonal à l'axe longitudinal 112 du levier, en étant sécant de celui-ci.

Les moyens permettant d'articuler respectivement le levier 110 sur la cage intermédiaire 130 et cette cage intermédiaire 130 sur le boîtier 140 peuvent faire l'objet de nombreuses variantes de réalisation.

Selon le mode de réalisation représenté sur les figures annexées, le levier 110 est articulé sur la cage intermédiaire 130 par une paire de tourillons 115 centrés sur l'axe 114 et diamétralement opposés par rapport à l'axe longitudinal 112. Les tourillons 115 sont solidaires du levier 110 et engagés dans des logements complémentaires 132 formés dans la cage intermédiaire 130.

De même, la cage intermédiaire 130 est articulée autour de l'axe 134 sur le boîtier 140 grâce à une paire de tourillons 136 centrés sur l'axe 134 et diamétralement opposés par rapport à l'axe longitudinal 112. Les tourillons 112 sont solidaires de la cage intermédiaire 130 et engagés dans des logements correspondant 142 formés sur le boîtier 140.

Plus précisément, le déplacement à pivotement du levier 110, autour de l'axe 114, par rapport à la cage intermédiaire 130, est indexé. Plus précisément encore, les moyens d'indexation de la rotation du levier 110 par rapport à la cage intermédiaire 130, autour de l'axe 114, définissent une position centrale de repos encadrée de deux positions de travail situées respectivement de part et d'autre de ladite position de repos.

Sur la figure 1, le levier 110 est représenté en position de repos.

De préférence, les deux positions de travail sont des positions instables. Cela signifie que lorsque le levier 110 est relaché après avoir été déplacé dans l'une des deux positions de travail, il revient automatiquement en position de repos.

Par ailleurs, de préférence, dans le cadre de la présente invention, les moyens d'indexation du déplacement du levier 110 par rapport à la cage intermédiaire 130 autour de l'axe 114 définissent un point dur lors du passage de la position de repos dans l'une des deux positions de travail.

Selon le mode de réalisation particulier représenté sur les figures annexées, ces moyens d'indexation comprennent une rampe d'indexage 121 définie sur la cage intermédiaire 130. Plus précisément, la rampe 121 comprend trois crans : un cran central 122 correspondant à une position de repos, encadré de deux crans latéraux 123, 124, correspondant à des positions de travail.

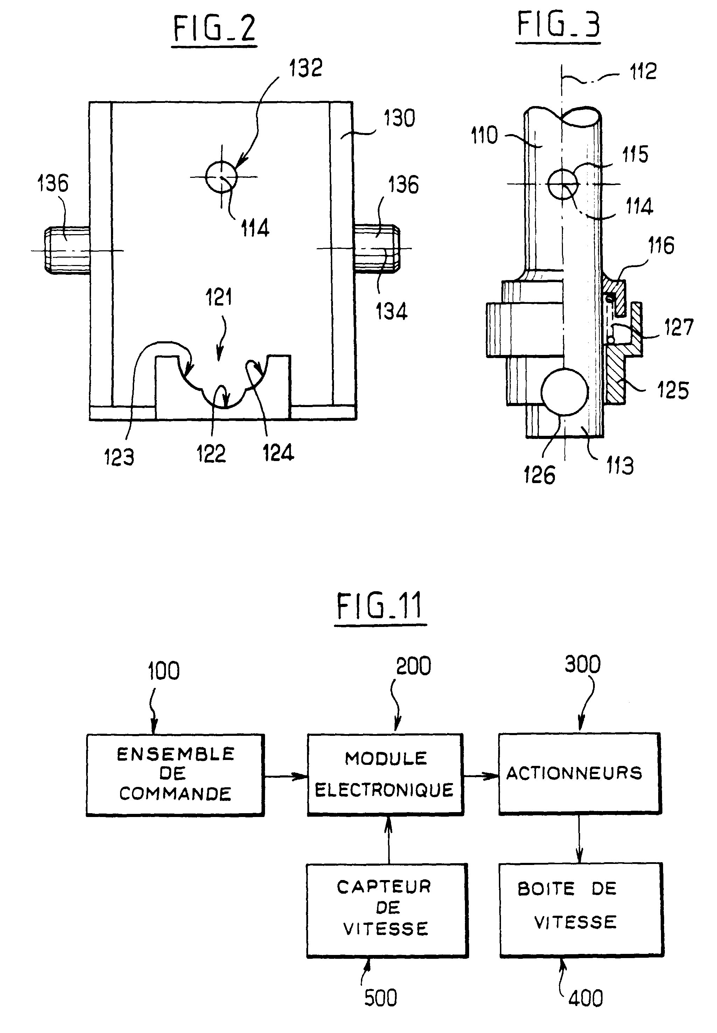

En outre, le levier 110 est muni d'un élément d'indexation 125 monté élastiquement sur le levier 110 et sollicité en appui contre la rampe 121. Plus précisément encore, selon le mode de réalisation représenté sur les figures annexées, comme on le voit notamment sur la figure 3, l'élément d'indexation 125 est formé d'une bague montée à coulissement sur le levier 110. La bague 125 comprend un doigt ou de préférence un galet 126 adapté pour reposer sur la rampe 121. Lorsque la bague 125 est pourvue d'un galet 126, l'axe de celui-ci est parallèle à l'axe de pivotement 114.

Un ressort 127 est placé sur le levier 110 entre la bague 125 et un anneau 116 lié au levier 110. Ainsi le ressort 127 sollicite la bague 125 en appui contre la rampe d'indexation 121 par l'intermédiaire de l'élément 126.

En pratique, il est prévu deux structures de rampes 121 similaires à celle visible sur les figures 1 et 2 symétriques par rapport à l'axe longitudinal 112 du levier, sur la cage intermédiaire 130, et de même deux galets 126 symétriques par rapport à l'axe longitudinal 112 sur l'élément d'indexation 125.

La cage 130 est également indexée dans son déplacement autour de l'axe 134 par rapport au boîtier 140. De préférence, ces moyens d'indexation qui peuvent être formés de moyens similaires à ceux représentés sur les figures 1 et 2 pour l'indexation du levier 110 par rapport à la cage intermédiaire 130, définissent une position de repos stable et une position de travail instable.

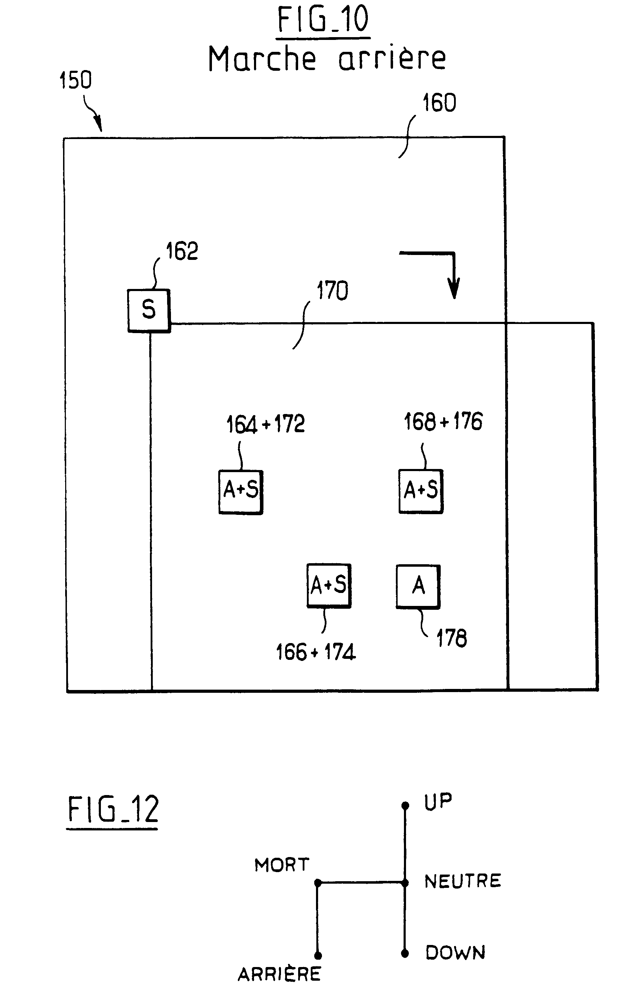

L'exploitation des deux axes de rotation 114 et 134 du levier 110 permet de définir une trajectoire de déplacement pour celui-ci en forme générale de "h" comme schématisé sur la figure 12.

Plus précisément, la trajectoire définie par le pivotement du levier 110 comprend un trajet principal et un trajet auxiliaire. Le trajet principal est obtenu par pivotement du levier 110 autour de l'axe 114 de par et d'autre d'un point médian correspondant à la position de repos représenté sur la figure 1. De préférence, la position de repos stable représentée sur la figure 1 correspond au point neutre, tandis que les deux positions de travail instables obtenues sur le trajet principal, par pivotement du levier 110 autour de l'axe 114 respectivement de part et d'autre de la position de repos correspondent de préférence à une commande respectivement en montée et en descente des rapports de vitesse. On rappelle que ces deux positions de travail instables sont obtenues lorsque l'élément 126 vient reposer contre l'un des deux crans latéraux 123, 124 de la rampe 121.

Le trajet auxiliaire quant à lui comprend au moins une composante orthogonale au trajet principal. Cette composante est obtenue par pivotement du levier 110 et de la cage intermédiaire 130 autour de l'axe 134, par rapport au boîtier 140. Cependant, de préférence, le trajet auxiliaire comprend plus précisément deux segments : l'un orthogonal au trajet principal, l'autre parallèle au trajet principal. Dans ce cas, le trajet auxiliaire précité est obtenu en pivotant tout d'abord à partir de la position de point neutre représentée sur la figure 1, le levier 110 et la cage intermédiaire 130 à rotation autour de l'axe 134 par rapport au boîtier 140 (le levier est alors en position point mort), puis tout en conservant ce pivotement, en déplaçant ensuite le levier 110 par rapport à la cage intermédiaire 130 dans la position de travail instable autorisée (correspondant à la position marche arrière).

On notera à l'examen de la figure 1 que les crans 122, 123, 124 composant la rampe d'indexation 121 présentent des discontinuités de courbes au niveau de leur zone de jonction. Ces zones de jonction définissent ainsi des points durs, lors du passage de la position de repos centrale vers l'une des deux positions de travail latérales instables.

Cette disposition ergonomique s'avère particulièrement avantageuse, car elle définit un effet tactile comparable à celui ressenti lors de la manipulation d'un levier de commande de boîte de vitesses mécanique classique. En d'autres termes, cette disposition permet que le conducteur manipulant le levier 110 ressente tactilement la commande de changement de rapport de vitesse.

Bien entendu la présente invention n'est pas limitée à cette disposition mécanique particulière pour obtenir un tel effet tactile. En pratique, un tel effet tactile permettant de ressentir le changement de position du levier 110 peut être obtenu à l'aide de nombreuses autres variantes de réalisation, telles que par exemple à l'aide de moyens d'indexation à billes se déplaçant sur des rampes d'indexation adéquates.

L'ergonomie peut être adaptée à chaque type de véhicule par exemple en optimisant, de construction, ou réglable par le constructeur, la pente des rampes 122, 123, 124 et/ou la force du ressort 127.

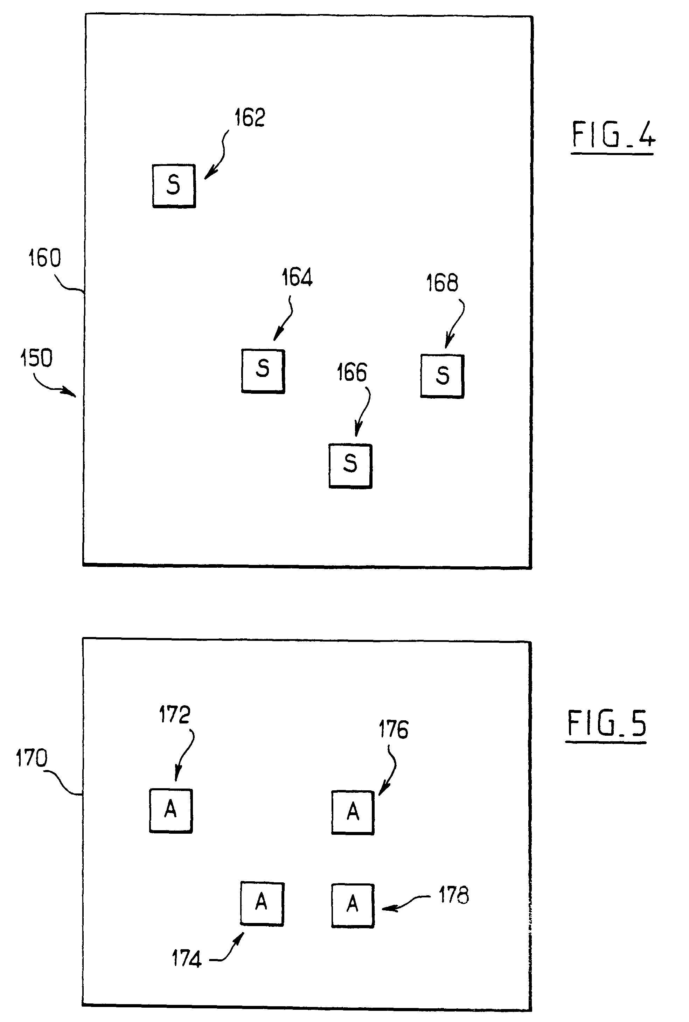

On va maintenant décrire la structure des organes de contrôle conforme à la présente invention représentée sur les figures 4 et suivantes annexées.

Comme on l'a évoqué précédemment, ces organes de contrôle comportent une série de capteurs sensibles au déplacement du levier 110. Par ailleurs, de préférence, ces capteurs sont à sortie électrique, sans contact physique.

Plus précisément encore, les organes de contrôle précités comprennent de préférence des sondes à effet Hall.

Selon le mode de réalisation préférentiel représenté sur les figures annexées, ces organes de contrôle 150 comportent deux plaques 160, 170.

La plaque 160 est fixé et portée par la base du boîtier 140, perpendiculairement à l'axe longitudinal 112, du levier 110. La plaque 160 fixe est pourvue de sondes à effet Hall 162, 164, 166, 168.

La seconde plaque 170 est placée également à la base du boîtier 140. Elle est intercalée entre la plaque 160 précitée et l'extrémité axiale 113 du levier 112. La plaque mobile 170 est guidée à coulissement dans un plan parallèle à la plaque 160, au moins dans deux directions orthogonales respectivement perpendiculaires aux axes 114, 134. La plaque 170 est munie en outre d'une structure apte à coopérer avec l'extrémité axiale 113 du levier 110 de sorte que les pivotements de ce dernier autour des axes 114, 134 précités entraînent le déplacement à translation de la plaque 170 dans ledit plan parallèle à la plaque 160. Les moyens précités permettant d'assurer une coopération entre la plaque 170 et l'extrémité axiale 113 du levier 110 peuvent être formés de tout moyen approprié, par exemple une double fourchette solidaire de la plaque 170 et recevant l'extrémité axiale 113 du levier 110.

La plaque mobile 170 porte des aimants 172, 174, 176 et 178 aptes à coopérer avec les sondes à effet Hall 162 à 168 précitées portées par la plaque 160.

Selon une caractéristique avantageuse de l'invention, l'un au moins des aimants 172 à 178 est utilisé pour commander les sondes à effet Hall 162 à 168 portées par la plaque 160, dans différentes positions d'actionnement du levier 110. Au moins l'une des sondes 162 à 168 est toujours active.

De même, selon une caractéristique importante de l'invention, au moins une sonde à effet Hall 162 à 168 portée par la plaque 160 est utilisée dans diverses positions d'actionnement du levier 110.

Par ailleurs, l'une au moins des positions d'actionnement du levier 110 entraîne la superposition de plusieurs aimants 172 à 178 sur plusieurs sondes à effet Hall 162 à 168 respectivement associées.

Selon le mode de réalisation particulier et préférentiel représenté sur les figures annexées, la plaque fixe 160 porte quatre sondes à effet Hall 162, 164, 166 et 168, tandis que la plaque mobile 170 porte quatre aimants 172, 174, 176 et 178.

Plus précisément encore, selon le mode de réalisation préférentiel représenté sur les figures annexées, les positionnements des sondes à effet Hall 162 à 168 et des aimants associés 172 à 178 portés respectivement par la plaque fixe 160 et la plaque mobile 170, sont les suivants, si l'on divise chacune de ces deux plaques 160, 170 en un réseau de quatre lignes et quatre colonnes :
- sonde à effet Hall 162 : ligne 1, colonne 1,
- sonde à effet Hall 164: ligne 3, colonne 2,
- sonde à effet Hall 166 : ligne 4, colonne 3,
- sonde à effet Hall 168 : ligne 3, colonne 4,
- aimant 172 : ligne 2, colonne 1,
- aimant 174: ligne 3, colonne 2,
- aimant 176 : ligne 2, colonne 3, et
- aimant 178 : ligne 3, colonne 3.

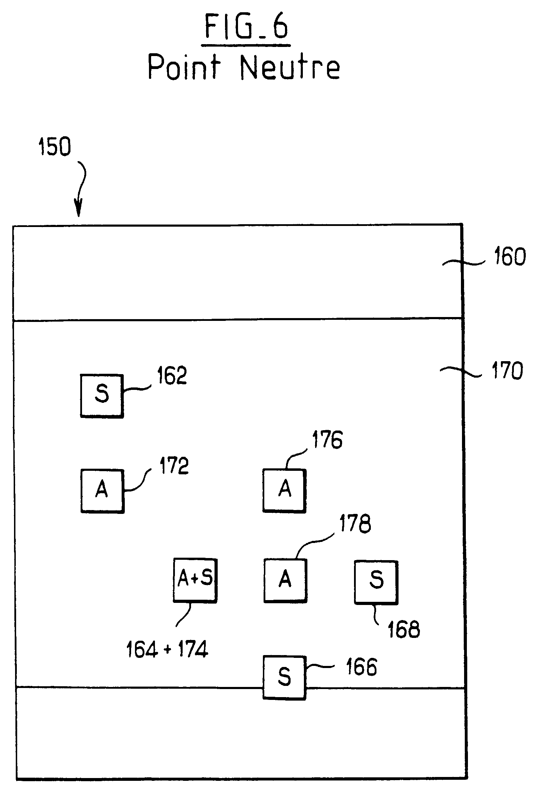

En position stable de point neutre, comme représenté sur la figure 6, l'aimant 174 est superposé à la sonde à effet Hall 164.

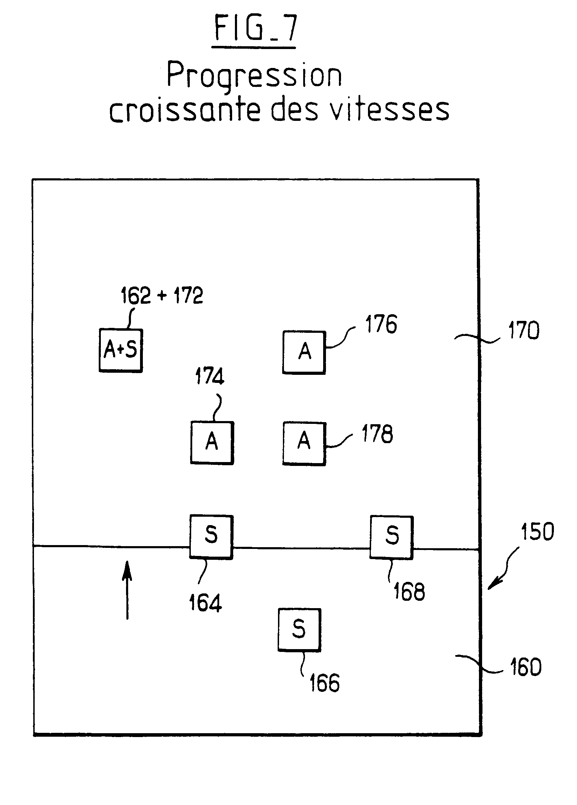

En position instable de commande de montée de vitesse obtenue par pivotement du levier 110 autour de l'axe 114, par rapport à la cage intermédiaire 130, comme représenté sur la figure 7, l'aimant 172 est superposé à la sonde à effet Hall 172.

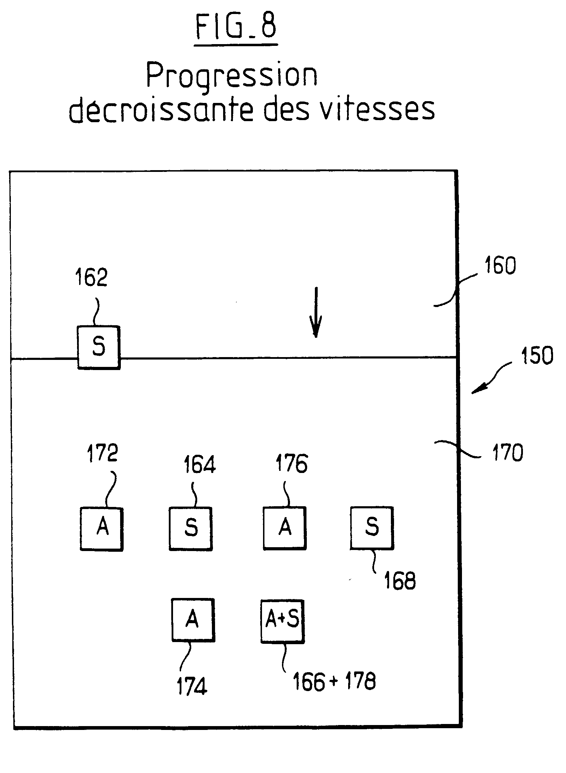

A l'inverse, en position instable de pivotement du levier 110 autour de l'axe 114 par rapport à la cage intermédiaire 130, dans le sens opposé correspondant à une descente des rapports de vitesse, comme représenté sur la figure 8, l'aimant 178 est superposé à la sonde à effet Hall 166.

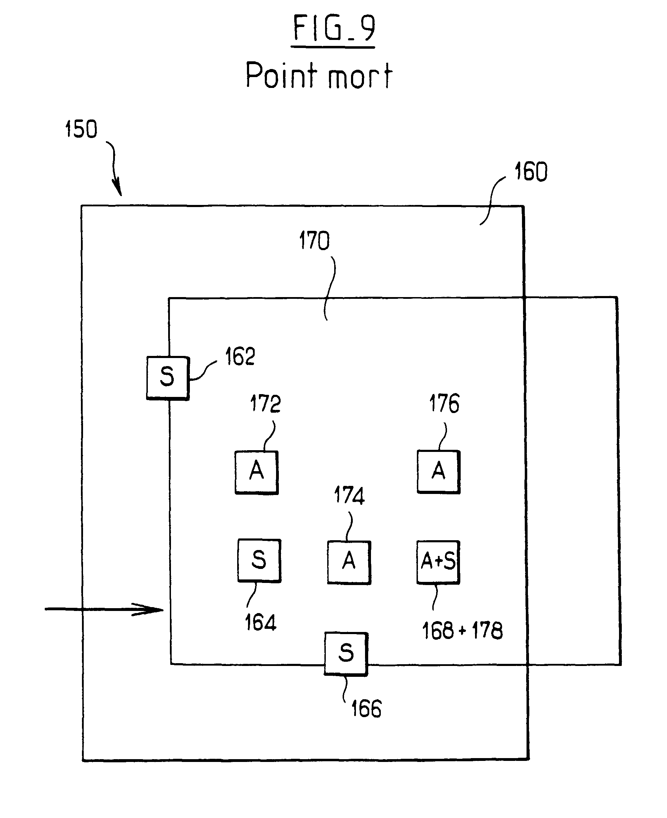

Comme on l'a représenté sur la figure 9, lors du déplacement du levier 110 et de la cage intermédiaire 130 autour de l'axe 134 par rapport au boîtier 140, soit en position instable de point mort, sur le premier segment du trajet auxiliaire précédemment défini, l'aimant 178 est superposé à la zone à effet Hall 168.

Enfin, lorsque le levier 110 est ensuite déplacé à pivotement autour de l'axe 114 par rapport à la cage auxiliaire 130, soit sur le second segment du trajet auxiliaire, pour obtenir la commande en marche arrière, les trois aimants 172, 174 et 176 sont respectivement superposés aux sondes à effet Hall 164, 166 et 168.

Le point mort correspond à la position roue libre du moteur.

Le point neutre (seule position stable du levier) correspond à la position de repos du levier en dehors d'une sollicitation (l'électronique obligeant le démarrage du moteur au point mort).

Le module électronique 200 exploite les signaux issus des sondes à effet Hall 162, 164, 166 et 168, lesquels définissent de façon univoque, la commande souhaitée par le conducteur, soit : point neutre, point mort, montée de rapports de vitesse, descente de rapports de vitesse ou commande de marche arrière.

Il convient de noter que la disposition précédemment définie des aimants 172 à 178 et des sondes à effet Hall 162 à 168 est particulièrement avantageuse car elle permet avec un nombre minimum de composants d'obtenir un recouvrement maximum dans les commandes.

La présente invention offre en particulier les avantages suivants :
- elle permet d'améliorer le confort de conduite,
- elle permet de supprimer la pédale d'embrayage, comme dans le cas d'une boîte de vitesses automatique,
- elle autorise un prix intermédiaire entre une boîte de vitesses mécanique et une boîte de vitesses automatique,
- elle maintient entièrement le plaisir de conduite,
- elle permet d'améliorer les performances de consommation, de puissance, de fatigue du moteur, (plage de fonctionnement optimale) du véhicule par rapport à une boîte de vitesses mécanique,
- elle permet d'améliorer la sécurité de conduite par rapport à une boîte de vitesses mécanique,
- elle est compatible avec les boîtes de vitesses mécaniques classiques.

Il convient également de noter que le système de commande conforme à la présente invention comprenant l'ensemble de commande 100, le module électronique 200 et les actionneurs 300 peut être fourni sous forme de kit afin d'équiper optionnellement des véhicules de série à boîte de vitesses mécanique standard.

Selon une autre caractéristique avantageuse de l'invention, les signaux disponibles en sortie des sondes à effet Hall 162, 164, 166 et 168 peuvent être exploités pour visualiser sur le tableau de bord ou en tout autre lieu, la vitesse engagée. Les signaux utilisés pour visualiser la vitesse engagée sont de préférence prélevés au niveau des actionneurs 300, et non point au niveau des organes de contrôle 150.

Selon une autre caractéristique avantageuse de l'invention, l'ensemble de commande 100 comprenant le levier 110, peut être formé d'un module réglable en position sur le chassis du véhicule. Cette disposition particulièrement intéressante pour le confort de conduite est autorisée par le fait que dans le cadre de l'invention, il n'existe plus de lien mécanique direct entre le levier de commande 110 et la boîte de vitesses 400.

Bien entendu la présente invention n'est pas limitée aux modes de réalisation particuliers qui viennent d'être décrits mais s'étend à toute variante conforme à son esprit.

Selon une variante de module réglable en position formé de l'ensemble de commande 100 peut être monté sur le siège du conducteur. Plus précisément, le module formé de l'ensemble de commande 100 est avantageusement réglable par rapport au siège, le siège étant lui-même de préférence réglable par rapport au chassis du véhicule. Comme cela est proposé de nos jours sur les véhicules automobiles, on peut prévoir une mémorisation du réglage et du siège par rapport au chassis et du levier de commande par rapport au siège en fonction du conducteur concerné.

En outre, les aimants et sondes à effet Hall utilisés dans le cadre de l'invention sont adaptés de sorte qu'il y ait recouvrement entre les activations des diverses sondes lors de la commutation du levier d'une position donnée à la position adjacente. En d'autres termes, l'ère d'interaction entre les aimants et les sondes à effet Hall est tel que les sondes à effet Hall activées lorsque le levier de commande occupe une première position ne soient désactivées qu'après activation des sondes à effet Hall en service lorsque le levier est déplacé dans une seconde position adjacente.

## Revendications

1. Ensemble de commande pour un système de commande d'une boîte de vitesses mécanique comprenant des actionneurs (300) aptes à agir sur la boîte de vitesses (400) pour éxécuter des changements de rapport sur la base d'ordres émis par l'ensemble de commande (100), comportant :
- un levier de commande (110),
- des moyens (120) de support et de guidage à déplacement du levier de commande (110), et
- des organes de contrôle (150) sensibles au déplacement du levier de commande (110) pour définir des ordres de passage des rapports de la boîte de vitesses,
les organes de contrôle (150) étant adaptés pour qu'il y ait recouvrement entre leurs activations lors de la commutation du levier (110) d'une position donnée à la position adjacente,
caractérisé par le fait que les moyens (120) de support et de guidage du levier (110) définissent pour celui-ci une trajectoire en forme générale de "h" comprenant :
- un trajet principal sensiblement rectiligne respectivement de part et d'autre d'un point médian correspondant au point neutre, les positions sur la trajectoire principale rectiligne, respectivement de part et d'autre de la position médiane correspondant au point neutre étant exploitées pour commander respectivement une montée de rapports de vitesse et une descente de rapports de vitesse, et
- un trajet auxiliaire comprenant deux segments, l'un orthogonal au trajet principal, permettant de passer d'un point neutre à un point mort, l'autre parallèle au trajet principal, exploité pour commander un rapport de marche arrière.

2. Ensemble selon la revendication 1, caractérisé par le fait que les organes de contrôle (150) comportent une série de capteurs (162, 164, 166, 168) sensibles au déplacement du levier (110).

3. Ensemble selon l'une des revendications 1 ou 2, caractérisé par le fait que les organes de contrôle (150) comportent une série de capteurs (162, 164, 166, 168) à sortie électrique.

4. Ensemble selon l'une des revendications 1 à 3, caractérisé par le fait que les organes de contrôle (150) comportent une série de capteurs (162, 164, 166, 168) sans contact physique.

5. Ensemble selon l'une des revendications 1 à 4, caractérisé par le fait que les organes de contrôle (150) comprennent une série de sondes à effet Hall (162, 164, 166, 168).

6. Ensemble selon l'une des revendications 1 à 5, caractérisé par le fait que les organes de contrôle (150) comprennent deux plaques adjacentes : l'une (170) mobile liée à déplacement au levier (110), l'autre (160) fixe, une première plaque étant pourvue d'aimants (172, 174, 176, 178), tandis que la seconde plaque est pourvue de sondes à effet Hall (162, 164, 166, 168).

7. Ensemble selon la revendication 6, caractérisé par le fait que l'un au moins des aimants (172, 174, 176, 178) est actif dans diverses positions d'actionnement du levier (110).

8. Ensemble selon l'une des revendications 5 à 7, caractérisé par le fait que l'une au moins des sondes à effet Hall (162, 164, 166, 168) est active dans diverses positions d'actionnement du levier (110).

9. Ensemble selon la revendication 6, caractérisé par le fait que dans l'une au moins des positions d'actionnement du levier (110) plusieurs aimants (172, 174, 176, 178) sont respectivement superposés à plusieurs sondes à effet Hall (162, 164, 166, 168).

10. Ensemble selon l'une des revendications 1 à 9, caractérisé par le fait que les organes de contrôle (150) comprennent quatre sondes à effet Hall (162, 164, 166, 168).

11. Ensemble selon l'une des revendications 1 à 10, caractérisé par le fait que les organes de contrôle (150) comprennent quatre aimants (172, 174, 176, 178).

12. Ensemble selon les revendications 10 et 11, caractérisé par le fait que les quatre sondes à effet Hall (162, 164, 166, 168) et les quatre aimants (172, 174, 176 et 178) sont positionnés selon la définition suivante considérée en référence à un réseau fictif de quatre lignes et quatre colonnes :
- pour les sondes à effet Hall (162, 164, 166, 168): respectivement ligne 1 colonne 1, ligne 3 colonne 2, ligne 4 colonne 3, et ligne 3 colonne 4, (fig. 4)
- pour les aimants (172, 174, 176, 178) : respectivement ligne 2 colonne 1, ligne 3 colonne 2, ligne 2 colonne 3, et ligne 3 colonne 3. (fig 5).

13. Ensemble selon l'une des revendications 1 à 12, caractérisé par le fait que le levier de commande (110) impose au niveau des organes de contrôle (150) les superpositions suivantes d'aimants et de sondes à effet Hall :
- au point neutre, en position de commande montée de rapports de vitesse, en position de commande descente de rapports de vitesse et en position point mort : superposition d'un aimant (172 à 176) sur une sonde à effet Hall (162 à 168),
- en position de commande de marche arrière : superposition de trois aimants (172, 174, 176) sur trois sondes à effet Hall (164, 166, 168) respectivement associées.

14. Ensemble selon l'une des revendications 1 à 13, caractérisé par le fait que les moyens (120) de support et de guidage du levier (110) sont adaptés pour supporter celui-ci à pivotement autour de deux axes (114, 134) orthogonaux entre eux.

15. Ensemble selon l'une des revendications 1 à 14, caractérisé par le fait que les moyens (120) de support et de guidage du levier (110) sont adaptés pour définir un effet tactile comparable à celui d'un levier de commande de boîte de vitesses mécanique classique.

16. Ensemble selon l'une des revendications 1 à 15, caractérisé par le fait que les moyens (120) de support et de guidage du levier (110) définissent un point dur lors du passage entre deux positions d'actionnement.

17. Ensemble selon l'une des revendications 1 à 16, caractérisé par le fait que les moyens (120) de support et de guidage (110) comprennent une cage (130) sur laquelle le levier (110) est articulée autour d'un premier axe (114) et un boîtier (140) sur lequel ladite cage (130) est articulée autour d'un second axe (134) orthogonal à l'axe (114) précédemment cité.

18. Ensemble selon la revendication 17, caractérisé par le fait que le levier (110) est indexé dans son déplacement à rotation par rapport à la cage intermédiaire (130).

19. Ensemble selon la revendication 18, caractérisé par le fait que les moyens d'indexation (121) définissent une position de repos et deux positions de travail instables dans le pivotement du levier (110) par rapport à la cage (130).

20. Ensemble selon l'une des revendications 18 ou 19, caractérisé par le fait que les moyens d'indexation comprennent au moins une rampe d'indexation (121) solidaire de la cage et définissant trois crans d'indexation (122, 123, 124).

21. Ensemble selon la revendication 20, caractérisé par le fait que les moyens d'indexation comprennent en outre, un élément d'indexation formé de préférence d'une bague (125) sollicitée élastiquement contre la rampe d'indexation (121).

22. Ensemble selon l'une des revendications 20 ou 21, caractérisé par le fait qu'il comprend une bague d'indexation (125) montée à coulissement sur le levier (110), sollicitée élastiquement contre une rampe d'indexation (121) et reposant sur celle-ci par l'intermédiaire d'au moins un galet (126).

23. Ensemble selon l'une des revendications 17 à 22, caractérisé par le fait que la cage intermédiaire (130) est indexée dans son mouvement de pivotement par rapport au boîtier (140).

24. Ensemble selon la revendication 23, caractérisé par le fait que les moyens d'indexation définissent une position de repos stable et une position de travail instable dans le pivotement de la cage (130) par rapport au boîtier (140).

25. Ensemble selon l'une des revendications 17 à 19, 23 et 24, caractérisé par le fait qu'il comprend des moyens d'indexation à billes du pivotement du levier (110), lesquels moyens d'indexation à billes définissent des points durs lors de la commutation entre deux positions d'actionnement du levier (110).

26. Ensemble selon l'une des revendications 17 à 25, caractérisé par le fait qu'il comprend des moyens de réglage de l'effort de l'indexation, par exemple par réglage des rampes d'indexation et/ou de la force du ressort d'indexation.

27. Ensemble selon l'une des revendications 1 à 26, caractérisé par le fait qu'il est adapté pour être réglé en position par le conducteur par rapport au chassis d'un véhicule.

28. Ensemble selon l'une des revendications 1 à 27, caractérisé par le fait que les organes de contrôle comprennent des sondes à effet Hall (162, 164, 166, 168) et des aimants (172, 174, 176, 178) adaptés de sorte que les sondes à effet Hall activées lorsque le levier de commande (110) occupe une première position, ne soient désactivées qu'après activation des sondes à effet Hall en service lorsque le levier (110) est déplacé dans une seconde position adjacente.

29. Système de commande d'une boîte de vitesses mécanique, caractérisé par le fait qu'il comprend :
- un ensemble de commande conforme à l'une des revendications 1 à 28 comportant :
. un levier de commande (110)
. des moyens de support et de guidage à déplacement du levier de commande (110), et
. des organes de contrôle (150) sensibles au déplacement du levier de commande (110) pour définir des ordres de passage des rapports de la boîte de vitesses, et
- des actionneurs (300) aptes à agir sur la boîte de vitesses (400) pour éxécuter les changements de rapports sur la base des ordres émis par l'ensemble de commande (100).

30. Système selon la revendication 29, caractérisé par le fait que les actionneurs (300) sont pilotés par un module électronique (200) relié à un capteur de vitesse (500), lequel module électronique (200) contrôle que des actionneurs (300) ont bien éxécuté, des ordres de passage émis par l'ensemble de commande (100), en fonction de la vitesse du véhicule.

## Patentansprüche

1. Bedienungsanordnung für ein mechanisches Geschwindigkeitswechselgetriebe mit Betätigungseinrichtungen (300) zum Einwirken auf das Geschwindigkeitswechselgetriebe (400), um Änderungen des Übersetzungsverhältnisses aufgrund von Befehlen auszuführen, die durch die Steuerungseinheit (100) gegeben werden, umfassend:
- einen Steuerungshebel (110),
- Träger- und Bewegungsführungseinrichtungen (120) des Steuerungshebels (110), und
- Kontrollorgane (150), empfindlich für die Bewegungen des Steuerungshebels (110), um Befehle an das Geschwindigkeitswechselgetriebe zu definieren, wobei die Kontrollorgane (150) so angepaßt sind, daß zwischen ihren Aktivierungen beim Umschalten des Hebels (110) von einer bestimmten Stellung in die benachbarte Stellung Überdeckung besteht,
**dadurch gekennzeichnet**,
daß die Träger- und Bewegungsführungseinrichtungen (120) des Hebels (110) für diesen einen generell "h"-förmigen Weg definieren, umfassend:
- einen im wesentlichen geradlinigen Hauptweg, beiderseits eines dem Neutralpunkt entsprechenden Mittelpunkts, wobei die Stellungen auf dem geradlinigen Hauptweg beiderseits der dem Neutralpunkt entsprechenden Mittelstellung benutzt werden, um jeweils eine Zunahme beziehungsweise eine Abnahme der Übersetzungsverhältnisse zu steuern, und
- einen Hilfsweg, der zwei Segmente aufweist, eines rechtwinklig zum Hauptweg, das den Übergang vom Neutralpunkt zu einem Totpunkt ermöglicht, und das andere parallel zum Hauptweg, das benutzt wird, um eine Rückwärtsgangübersetzung zu steuern.

2. Anordnung nach Anspruch 1, dadurch gekennzeichnet, daß die Kontrollorgane (150) eine Serie von Sensoren (162, 164, 166, 168) umfassen, die empfindlich sind für die Bewegungen des Hebels (110).

3. Anordnung nach einem der Ansprüche 1 oder 2, dadurch gekennzeichnet, daß die Kontrollorgane (150) eine Serie von Sensoren (162, 164, 166, 168) mit elektrischem Ausgang umfassen.

4. Anordnung nach einem der Ansprüche 1 bis 3, dadurch gekennzeichnet, daß die Kontrollorgane (150) eine Serie von Sensoren (162, 164, 166, 168) ohne physikalische Berührung umfassen.

5. Anordnung nach einem der Ansprüche 1 bis 4, dadurch gekennzeichnet, daß die Kontrollorgane (150) eine Serie von Halleffekt-Sonden (162, 164, 166, 168) umfassen.

6. Anordnung nach einem der Ansprüche 1 bis 5, dadurch gekennzeichnet, daß die Kontrollorgane (150) zwei benachbarte Platten umfassen: die eine (170) beweglich, verschiebbar mit dem Hebel (110) verbunden, die andere (160) feststehend, wobei eine erste Platte mit Magneten (172, 174, 176, 178) versehen ist, während die zweite Platte mit Halleffekt-Sonden (162, 164, 166, 168) versehen ist.

7. Anordnung nach Anspruch 6, dadurch gekennzeichnet, daß wenigstens einer der Magnete (172, 174, 176, 178) in diversen Betätigungsstellungen des Hebels (110) aktiv ist.

8. Anordnung nach einem der Ansprüche 5 bis 7, dadurch gekennzeichnet, daß wenigstens eine der Halleffekt-Sonden (162, 164, 166, 168) in diversen Betätigungsstellungen des Hebels (110) aktiv ist.

9. Anordnung nach Anspruch 6, dadurch gekennzeichnet, daß in wenigstens einer der Betätigungsstellungen des Hebels (110) mehrere Magnete (172, 174, 176, 178) jeweils über mehreren Halleffekt-Sonden (162, 164, 166, 168) liegen.

10. Anordnung nach einem der Ansprüche 1 bis 9, dadurch gekennzeichnet, daß die Kontrollorgane (150) vier Halleffekt-Sonden (162, 164, 166, 168) umfassen.

11. Anordnung nach einem der Ansprüche 1 bis 10, dadurch gekennzeichnet, daß die Kontrollorgane (150) vier Magnete (172, 174, 176, 178) umfassen.

12. Anordnung nach den Ansprüchen 10 und 11, dadurch gekennzeichnet, daß die vier Halleffekt-Sonden (162, 164, 166, 168) und die vier Magnete (172, 174, 176, 178) der nachfolgenden Definition entsprechend positioniert sind, bezogen auf ein fiktives Bezugsgitter:
- bei den Halleffekt-Sonden (162, 164, 166, 168): jeweils Zeile 1 Spalte 1, Zeile 3 Spalte 2, Zeile 4 Spalte 3 und Zeile 3 Spalte 4 (Fig. 4)
- bei den Magneten (172, 174, 176, 178): jeweils Zeile 2 Spalte 1, Zeile 3 Spalte 2, Zeile 2 Spalte 3 und Zeile 3 Spalte 3 (Fig. 5).

13. Anordnung nach einem der Ansprüche 1 bis 12, dadurch gekennzeichnet, daß der Steuerungshebel (110) in Höhe der Kontrollorgane (150) das Übereinanderliegen folgender Magnete und Halleffekt-Sonden erzwingt bzw. bewirkt:
- im Neutralpunkt, in der Steuerungsstellung der zunehmenden Übersetzungsverhältnisse, in der Steuerungsstellung der abnehmenden Übersetzungsverhältnisse und in der Totpunktstellung: ein Magnet (172 bis 176) befindet sich über einer Halleffekt-Sonde (162 bis 168),
- in der Rückwärtsgang-Steuerungsstellung: drei Magnete (172, 174, 176) liegen über drei Halleffekt-Sonden (164, 166, 168), jeweils verbunden.

14. Anordnung nach einem der Ansprüche 1 bis 13, dadurch gekennzeichnet, daß die Träger- und Bewegungsführungseinrichtungen (120) des Steuerungshebels (110) angepaßt sind, um diesen beim Schwenken um zwei zueinander rechtwinklige Achsen (114, 134) zu stützen.

15. Anordnung nach einem der Ansprüche 1 bis 14, dadurch gekennzeichnet, daß die Träger- und Bewegungsführungseinrichtungen (120) des Steuerungshebels (110) angepaßt sind, um einen Tasteffekt zu definieren, der vergleichbar ist mit dem eines Steuerungshebels eines klassischen mechanischen Schaltgetriebes.

16. Anordnung nach einem der Ansprüche 1 bis 15, dadurch gekennzeichnet, daß die Träger- und Bewegungsführungseinrichtungen (120) des Steuerungshebels (110) beim Übergang zwischen zwei Betätigungsstellungen einen harten Punkt definieren.

17. Anordnung nach einem der Ansprüche 1 bis 16, dadurch gekennzeichnet, daß die Träger- und Bewegungsführungseinrichtungen (120) des Steuerungshebels (110) einen Käfig (130) umfassen, in dem der Hebel (110) gelenkig auf einer ersten Achse (114) gelagert ist, und ein Gehäuse (140), in dem der genannte Käfig (130) gelenkig um eine zweite Achse (134) gelagert ist, rechtwinklig zu der vorhergehend genannten Achse (114).

18. Anordnung nach Anspruch 17, dadurch gekennzeichnet, daß der Hebel (110) bei seiner Drehbewegung indexiert ist in bezug auf den Zwischenkäfig (130).

19. Anordnung nach Anspruch 18, dadurch gekennzeichnet, daß die Indexierungseinrichtungen (121) eine Ruhestellung und zwei beim Schwenken des Hebels (110) in bezug auf den Käfig (130) instabile Arbeitsstellungen definieren.

20. Anordnung nach einem der Ansprüche 18 oder 19, dadurch gekennzeichnet, daß die Indexierungseinrichtungen wenigstens eine fest mit dem Käfig (130) verbundene Indexierungsrampe (121) umfassen, die drei Indexierungsstellungen (122, 123, 124) definiert.

21. Anordnung nach Anspruch 20, dadurch gekennzeichnet, daß die Indexierungseinrichtungen außerdem ein Indexierungselement umfassen, vorzugsweise gebildet durch einen Ring (125), der die Indexierungsrampe (121) elastisch belastet.

22. Anordnung nach einem der Ansprüche 20 oder 21, dadurch gekennzeichnet, daß sie einen Indexierungsring (125) umfaßt, gleitend auf dem Hebel (110) angebracht, der eine Indexierungsrampe (121) elastisch belastet und auf dieser mittels wenigstens einer Rolle (126) ruht.

23. Anordnung nach einem der Ansprüche 17 bis 22, dadurch gekennzeichnet, daß der Zwischenkäfig (130) bei seiner Schwenkbewegung in bezug auf das Gehäuse (140) indexiert ist.

24. Anordnung nach Anspruch 23, dadurch gekennzeichnet, daß die Indexierungseinrichtungen beim Schwenken des Käfigs (130) in bezug auf das Gehäuse (140) eine stabile Ruhestellung und eine instabile Arbeitsstellung definieren.

25. Anordnung nach einem der Ansprüche 17 bis 19, 23 und 24, dadurch gekennzeichnet, daß sie Kugelindexierungseinrichtungen der Schwenkung des Hebels (110) umfaßt, wobei diese Kugelindexierungseinrichtungen beim Schalten zwischen zwei Betätigungsstellungen des Hebels (110) harte Punkte definieren.

26. Anordnung nach einem der Ansprüche 17 bis 25, dadurch gekennzeichnet, daß sie Einstelleinrichtungen des Indexierungsdrucks umfaßt, z.B. durch Verstellung der Indexierungsrampen und/oder der Kraft der Indexierungsfeder.

27. Anordnung nach einem der Ansprüche 1 bis 26, dadurch gekennzeichnet, daß sie geeignet ist, durch den Fahrer positionsreguliert zu werden in bezug auf das Chassis eines Fahrzeugs.

28. Anordnung nach einem der Ansprüche 1 bis 27, dadurch gekennzeichnet, daß die Kontrollorgane Halleffektsonden (162, 164, 166, 168) und Magnete (172, 174, 176, 178) umfassen, die so angepaßt sind, daß die Halleffektsonden, aktiviert wenn der Steuerungshebel (110) eine erste Stellung einnimmt, erst desaktiviert werden nach Aktivierung derjenigen Halleffekt-Sonden, die im Einsatz sind, wenn der Hebel (110) in eine zweite, benachbarte Stellung bewegt wird.

29. Steuerungssystem eines mechanischen Geschwindigkeitswechselgetriebes, dadurch gekennzeichnet, daß es enthält:
- eine Steuerungseinheit entsprechend einem der Ansprüche 1 bis 28, umfassend:
. einen Steuerungshebel (110),
. Träger- und Bewegungsführungseinrichtungen (120) des Steuerungshebels (110), und
. Kontrollorgane (150), empfindlich für die Bewegungen des Steuerungshebels (110), um Befehle an das Geschwindigkeitswechselgetriebe zu definieren, und
- Betätigungseinrichtungen (300) zum Einwirken auf das Geschwindigkeitswechselgetriebe (400), um Änderungen des Übersetzungsverhältnisses aufgrund von Befehlen auszuführen, die durch die Steuerungseinheit (100) gegeben werden.

30. System nach Anspruch 29, dadurch gekennzeichnet, daß die Betätigungseinrichtungen (300) durch einen elektronischen Modul (200) gesteuert werden, der mit einem Geschwindigkeitssensor (500) verbunden ist, wobei dieser elektronische Modul (200) kontolliert, ob die Betätiungseinrichtungen (300) die durch die Steuereinheit (100) gegebenen Übergangsbefehle auch ausgeführt haben, in Abhängigkeit von der Geschwindigkeit des Fahrzeugs.

## Claims

1. A control assembly for a control system for controlling a manual gearbox, the control system including actuators (300) suitable for acting on the gearbox (400) to execute gear changes on the basis of commands issued by the control assembly (100), said control assembly comprising:
a control lever (110);
support and guide means (120) for displaceably supporting and guiding the control lever (110); and
monitoring members (150) responding to the control lever (110) being displaced by defining gearbox ratio change commands;
the monitoring members (150) being organized so that there is overlap between their activations on shifting the lever (110) from a given position to an adjacent position;
said control assembly being characterized by the fact that, for this purpose, the support and guide means (120) for supporting and guiding the lever (110) define a generally "h" shaped gate comprising:
a substantially rectilinear main path extending on either side of a midpoint corresponding to a no-change position, the positions on the rectilinear main path on either side of the midpoint corresponding to the no-change position being used respectively for a change-up command and for a change-down command; and
an auxiliary path comprising two segments, namely a segment orthogonal to the main path making it possible to go from the no-change position to a neutral position, and a segment parallel to the main path used for commanding reverse gear.

2. An assembly according to claim 1, characterized by the fact that the monitoring members (150) include a series of sensors (162, 164, 166, 168) responsive to the lever (110) being displaced.

3. An assembly according to claim 1 or 2, characterized by the fact that the monitoring members (150) include a series of sensors (162, 164, 166, 168) having electrical outputs.

4. An assembly according to any one of claims 1 to 3, characterized by the fact that the monitoring members (150) include a series of sensors (162, 164, 166, 168) having no mechanical contact.

5. An assembly according to any one of claims 1 to 4, characterized by the fact that the monitoring members (150) include a series of Hall-effect probes (162, 164, 166, 168).

6. An assembly according to any one of claims 1 to 5, characterized by the fact that the monitoring members (150) comprise two adjacent plates, namely a moving plate (170) constrained to move with the lever (110), and a stationary plate (160), a first plate being provided with magnets (172, 174, 176, 178), while the second plate is provided with Hall-effect probes (162, 164, 166, 168).

7. An assembly according to claim 6, characterized by the fact that at least one of the magnets (172, 174, 176, 178) is active in various actuating positions of the lever (110).

8. An assembly according to any one of claims 5 to 7, characterized by the fact that at least one of the Hall-effect probes (162, 164, 166, 168) is activated in various actuating positions of the lever (110).

9. An assembly according to claim 6, characterized by the fact that, in at least one of the actuating positions of the lever (110), a plurality of magnets (172, 174, 176, 178) are respectively superposed on a plurality of Hall-effect probes (162, 164, 166, 168).

10. An assembly according to any one of claims 1 to 9, characterized by the fact that the monitoring members (150) include four Hall-effect probes (162, 164, 166, 168).

11. An assembly according to any one of claims 1 to 10, characterized by the fact that the monitoring members (150) include four magnets (172, 174, 176, 178).

12. An assembly according to claims 10 and 11, characterized by the fact that the four Hall-effect probes (162, 164, 166, 168) and the four magnets (172, 174, 176, and 178) are positioned in compliance with the following definition, considered with reference to an imaginary grid of four rows and four columns:
for the Hall-effect probes (162, 164, 166, 168): respectively row 1, column 1; row 3, column 2; row 4, column 3; and row 3, column 4 (Figure 4); and
for the magnets (172, 174, 176, 178): respectively row 2, column 1; row 3, column 2; row 2, column 3; and row 3, column 3 (Figure 5).

13. An assembly according to any one of claims 1 to 12, characterized by the fact that the control lever (110) constrains the magnets and Hall-effect probes of the monitoring members (150) to be superposed as follows:
in the no-change position, in the change-up command position, in the change-down command position, and in the neutral position: one magnet (172 to 176) is superposed on one Hall-effect probe (162 to 168); and
in the reverse gear command position, three magnets (172, 174, 176) are superposed on three respectively associated Hall-effect probes (164, 166, 168).

14. An assembly according to any one of claims 1 to 13, characterized by the fact that the support and guide means (120) for supporting and guiding the lever (110) are organized to support said lever so that it can pivot about two mutually orthogonal axes (114, 134).

15. An assembly according to any one of claims 1 to 14, characterized by the fact that the support and guide means (120) for supporting and guiding the lever (110) are organized to define a tactile effect comparable to that of a control lever for controlling a conventional manual gearbox.

16. An assembly according to any one of claims 1 to 15, characterized by the fact that the support and guide means (120) for supporting and guiding the lever (110) define a stiff point on going between two actuating positions.

17. An assembly according to any one of claims 1 to 16, characterized by the fact that the support and guide means (120) comprise a cradle (130) to which the lever (110) is hinged about a first axis (114), and a housing (140) to which said cradle (130) is hinged about a second axis (134) that is orthogonal to the first axis (114).

18. An assembly according to claim 17, characterized by the fact that the rotation of the lever (110) relative to the intermediate cradle (130) is indexed.

19. An assembly according to claim 18, characterized by the fact that the indexing means (121) define a rest position and two unstable work positions obtained by pivoting the lever (110) relative to the cradle (130).

20. An assembly according to claim 18 or 19, characterized by the fact that the indexing means include at least one indexing ramp (121) secured to the cradle and defining three indexing notches (122, 123, 124).

21. An assembly according to claim 20, characterized by the fact that the indexing means further include an indexing element preferably formed by a ring (125) resiliently urged against the indexing ramp (121).

22. An assembly according to claim 20 or 21, characterized by the fact that it includes an indexing ring (125) slidably mounted on the lever (110), resiliently urged against an indexing ramp (121), and standing thereon via at least one wheel (126).

23. An assembly according to any one of claims 19 to 22, characterized by the fact that the pivoting of the intermediate cradle (130) relative to the housing (140) is indexed.

24. An assembly according to claim 23, characterized by the fact that the indexing means define a stable rest position and an unstable work position obtained by pivoting the cradle (130) relative to the housing (140).

25. An assembly according to any one of claims 17 to 19, 23 and 24, characterized by the fact that it includes ball indexing means for indexing the pivoting of the lever (110), which ball indexing means define stiff points on shifting between two actuating positions of the lever (110).

26. An assembly according to any one of claims 17 to 25, characterized by the fact that it includes means for adjusting the indexing force, e.g. by adjusting the indexing ramps and/or the force of the indexing spring.

27. An assembly according to any one of claims 1 to 26, characterized by the fact that it is suitable for enabling its position to be adjusted relative to the chassis of a vehicle.

28. An assembly according to any one of claims 1 to 27, characterized by the fact that the monitoring members include Hall-effect probes (162, 164, 166, 168) and magnets (172, 174, 176, 178) organized so that the Hall-effect probes activated when the control lever (110) is in a first position are deactivated only once the Hall-effect probes in service when the lever (110) is displaced into an adjacent second position have been activated.

29. A control system for controlling a manual gearbox, said system being characterized by the fact that it comprises:
a control assembly according to any one of claims 1 to 28, comprising:
a control lever (110);
support and guide means for displaceably supporting and guiding the control lever (110); and
monitoring members (150) responding to the control lever (110) being displaced by defining gearbox ratio change commands; and
actuators (300) suitable for acting on the gearbox (400) to execute the gear changes on the basis of the command issued by the control assembly (100).

30. A system according to claim 29, characterized by the fact that the actuators (300) are driven by an electronic module (200) connected to a speed sensor (500), which electronic module (200) checks that the actuators (300) execute the change commands issued by the control assembly (100) correctly as a function of the speed of the vehicle.
